# FASCICULE DE BREVET EUROPEEN

(11) **EP 3 186 107 B1**
(45) Date de publication et mention de la délivrance du brevet: **29.09.2021**
(21) Numéro de dépôt: 15767203.1
(22) Date de dépôt: 03.08.2015
(51) Int. Cl.: B60Q 1/26

(54) **DISPOSITIF DE CONTRÔLE ÉQUILIBRÉ DE L'INTENSITÉ LUMINEUSE D'UN DISPOSITIF DE SIGNALISATION ADAPTATIF D'UN BLOC OPTIQUE DE VÉHICULE**
VORRICHTUNG ZUR AUSGEGLICHENEN STEUERUNG DER LICHTINTENSITÄT EINER ADAPTIVEN SIGNALISIERUNGSVORRICHTUNG EINES OPTISCHEN FAHRZEUGBLOCKS
DEVICE FOR BALANCED CONTROL OF THE LIGHT INTENSITY OF AN ADAPTIVE SIGNALLING DEVICE OF A VEHICLE OPTICAL BLOCK

(30) Priorité: 25.08.2014 FR 1457961
(43) Date de publication de la demande: 05.07.2017
(73) Titulaire: PSA Automobiles SA, 78300 Poissy (FR)
(72) Inventeur: GONCALVES, Whilk Marcelino, 75013 Paris (FR); LE DALL, Christophe, 92150 Suresnes (FR)
(86) Numéro de dépôt international: PCT/FR2015/052142
(87) Numéro de publication internationale: WO 2016/030600

(56) Documents cités:
- WO-A1-03/066375
- DE-A1-102005 038 179
- FR-A1- 2 988 052
- US-A1- 2006 274 545

## Description

L'invention concerne les blocs optiques adaptatifs de véhicule, et plus précisément les dispositifs de contrôle qui sont chargés de contrôler au moins certaines sources de lumière qui participent à au moins une fonction photométrique dans de tels blocs optiques.

On entend ici par « fonction photométrique » une fonction lumineuse assurée par un bloc optique adaptatif et destinée à participer à la signalisation du véhicule ou d'un événement relatif au véhicule. Par conséquent, il pourra notamment s'agir d'une fonction de feu de position (ou veilleuse ou encore lanterne), d'une fonction de feu de stop, d'une fonction de feu de changement de direction, d'une fonction de feu antibrouillard ou d'une fonction de feu de jour (ou DRL (pour « Daytime running Light (or Lamp) » - signalisation lumineuse allumée automatiquement lorsque le véhicule est mis en fonctionnement pendant le jour)).

Comme le sait l'homme de l'art, dans certains véhicules, généralement de type automobile, l'intensité du faisceau de lumière qui est délivré par une source participant à une fonction de signalisation doit être comprise entre des valeurs minimale et maximale définies par une réglementation. En raison de l'avènement de blocs optiques dits adaptatifs (par exemple de type ARS « Adaptive Rearlight System »), c'est-à-dire délivrant une intensité variable en fonction de l'intensité lumineuse à l'extérieur du véhicule pour offrir une adaptation automatique aux conditions extérieures de visibilité (notamment jour/nuit, pluie, brouillard), la valeur maximale autorisée pour la plupart des fonctions photométriques de signalisation a été notablement augmentée.

Afin d'éviter que le coût d'une fonction photométrique de signalisation adaptative soit trop élevée, on est contraint de faire varier l'intensité dans la plage réglementaire (définie par les valeurs minimale et maximale) par paliers en fonction de seuils de luminosité extérieure. La réglementation requiert que la répartition d'intensité soit équilibrée d'un palier à l'autre sans spécifier les valeurs moyennes des paliers.

L'invention a notamment pour but de proposer un dispositif de contrôle des intensités de fonctions photométriques conforme à l'objet de la revendication 1 dont le préambule est notamment décrit dans les documents FR2988052A1, DE102005038179A1, US2002/274545A1 et WO03/066375A1

L'invention a plus particulièrement pour but de proposer un contrôle équilibré des intensités de fonctions photométriques au moyen de paliers (ou sous-intervalles) adaptés à la variation d'intensité non linéaire qui est effectivement perçue par l'œil humain.

L'apport de l'invention par rapport à l'état de l'art est défini par la partie caractérisante de la revendication 1. L'invention propose également un bloc optique adaptatif, propre à équiper un véhicule et comprenant au moins une source propre à délivrer un faisceau de lumière et au moins un dispositif de contrôle du type de celui présenté ci-avant.

Par exemple, chaque fonction photométrique à laquelle participe une source peut être choisie parmi au moins une fonction de feu de position (ou lanterne), une fonction de feu de stop, une fonction de feu de changement de direction, une fonction de feu antibrouillard et une fonction de feu de jour.

L'invention propose également un véhicule, éventuellement de type automobile, et comprenant au moins un bloc optique adaptatif du type de celui présenté ci-avant.

D'autres caractéristiques et avantages de l'invention apparaîtront à l'examen de la description détaillée ci-après, et du dessin annexé, sur lequel l'unique figure illustre de façon schématique et fonctionnelle un exemple de réalisation d'un bloc optique comprenant un dispositif de contrôle selon l'invention.

L'invention a notamment pour but de proposer un dispositif de contrôle DC destiné à contrôler de façon équilibrée l'intensité d'au moins un faisceau de lumière délivré par au moins une source SL participant à une fonction photométrique au sein d'un bloc optique BO adaptatif de véhicule.

Dans ce qui suit, on considère, à titre d'exemple non limitatif, que le bloc optique BO est destiné à équiper un véhicule automobile. Mais l'invention n'est pas limitée à ce type de véhicule. Elle concerne en effet tout type de véhicule équipé d'au moins un bloc optique adaptatif (c'est-à-dire délivrant une intensité variable en fonction de l'intensité lumineuse à l'extérieur du véhicule).

Par ailleurs, on considère dans ce qui suit, à titre d'exemple non limitatif, que le bloc optique BO est un feu arrière. Mais l'invention n'est pas limitée à ce type de bloc optique. Elle concerne en effet également les feux avant de signalisation.

On a schématiquement illustré sur l'unique figure un exemple de réalisation simplifié d'un bloc optique BO selon l'invention (ici un feu arrière adaptatif à titre d'exemple non limitatif). Dans cet exemple non limitatif, le bloc optique BO adaptatif comprend un espace interne dans lequel n'est installé qu'un seul dispositif de signalisation DS. Mais il pourrait en comporter plusieurs (au moins deux).

Le dispositif de signalisation DS comprend ici au moins une source de lumière SL agencée de manière à délivrer un faisceau de lumière d'intensité variable (non représenté).

Par exemple, la source de lumière SL peut comporter au moins une diode électroluminescente (ou LED) ou une diode laser ou un laser à gaz ou encore une lampe (ou ampoule).

Le dispositif de signalisation DS, et en particulier sa source SL, est couplé (directement ou indirectement) à un dispositif de contrôle DC comprenant des moyens de contrôle MC agencés pour contrôler (au moins) l'intensité du faisceau de lumière délivré par la source SL en fonction d'une fonction photométrique à laquelle participe cette dernière (SL).

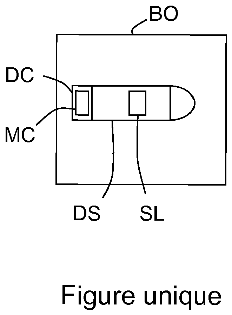

Dans l'exemple non limitatif illustré sur la figure 1, le dispositif de contrôle DC fait partie du bloc optique BO (éventuellement de son dispositif de signalisation DS). Mais cela n'est pas obligatoire. Ce dispositif de contrôle DC pourrait en effet être externe au bloc optique BO, et par exemple faire partie d'un calculateur du véhicule. Par conséquent, le dispositif de contrôle DC peut être réalisé sous la forme de modules logiciels (ou informatiques ou encore « software »), ou bien d'une combinaison de circuits électroniques (ou « hardware ») et de modules logiciels.

La fonction photométrique assurée par le bloc optique BO est destinée à participer à la signalisation du véhicule ou d'un événement relatif au véhicule. Par conséquent, il pourra notamment s'agir d'une fonction de feu de position (ou veilleuse ou encore lanterne), d'une fonction de feu de stop, d'une fonction de feu de changement de direction, d'une fonction de feu antibrouillard ou d'une fonction de feu de jour (ou DRL (pour « Daytime running Light (or Lamp) » - signalisation lumineuse allumée automatiquement lorsque le véhicule est mis en fonctionnement pendant le jour)).

Les moyens de contrôle MC sont plus précisément agencés pour contrôler l'intensité du faisceau de lumière délivré par la source SL afin qu'elle appartienne à un sous-intervalle d'intensité SIn qui est choisi en fonction d'une mesure d'intensité lumineuse à l'extérieur du véhicule parmi au moins deux sous-intervalles d'intensité SIn qui appartiennent à un intervalle d'intensité fonction de la fonction photométrique concernée.

En d'autres termes, à chaque fonction photométrique est associé un intervalle d'intensité (défini par une borne minimale et une borne maximale, par exemple de façon réglementaire), et cet intervalle d'intensité est subdivisé en N sous-intervalles SIn (avec n = 1 à N et N ≥ 2) définis chacun par une valeur moyenne In et associés respectivement à des intervalles différents de mesures d'intensité lumineuse à l'extérieur du véhicule. L'indice n désigne ici les sous-intervalles d'intensité SIn de chaque intervalle d'intensité, et N est le nombre total de sous-intervalles d'intensité SIn de chaque intervalle d'intensité.

Par exemple, si N est égal à 4, un premier sous-intervalle SI1 (n = 1) est associé à un premier intervalle de mesures d'intensité lumineuse à l'extérieur du véhicule IM1 ([IM1ₘᵢₙ, IM1ₘₐₓ]), un deuxième sous-intervalle SI2 (n = 2) est associé à un deuxième intervalle de mesures d'intensité lumineuse à l'extérieur du véhicule IM2 ([IM2ₘᵢₙ, IM2ₘₐₓ], avec IM2ₘᵢₙ > IM1ₘₐₓ), un troisième sous-intervalle SI3 (n = 3) est associé à un troisième intervalle de mesures d'intensité lumineuse à l'extérieur du véhicule IM3 ([IM3ₘᵢₙ, IM3ₘₐₓ], avec IM3ₘᵢₙ > IM2ₘₐₓ), et un quatrième sous-intervalle SI3 (n = 3) est associé à un quatrième intervalle de mesures d'intensité lumineuse à l'extérieur du véhicule IM4 ([IM4ₘᵢₙ, IM4ₘₐₓ], avec IM4ₘᵢₙ > IM3ₘₐₓ).

Le bloc optique BO offre ainsi une adaptation d'intensité lumineuse qui apparaît équilibrée dans différents scénarios d'utilisation et conditions de visibilité extérieure.

Les mesures d'intensité lumineuse à l'extérieur du véhicule peuvent, par exemple, être fournies par au moins un capteur équipant le véhicule. Ce capteur peut être un capteur de luminosité situé dans la partie avant du véhicule (par exemple sur la planche de bord, le parebrise ou le toit (ou pavillon)). Ce capteur de luminosité peut être associé à au moins un autre capteur, comme par exemple un capteur d'ensoleillement.

Par exemple, les sous-intervalles d'intensité SIn successifs de chaque intervalle d'intensité associé à une fonction photométrique peuvent comprendre une valeur moyenne In qui est définie par une suite géométrique prédéfinie.

Selon l'invention, les moyens de contrôle MC utilisent la suite géométrique In = I1*pⁿ⁻¹, pour définir la valeur moyenne de chaque sous-intervalle d'intensité SIn de chaque intervalle d'intensité. Dans cette suite géométrique I1 est l'intensité moyenne du sous-intervalle SI1 présentant les plus petites valeurs au sein d'un intervalle d'intensité considéré, et p est une valeur fonction de N, I1 et IN, IN étant l'intensité moyenne du sous-intervalle SIN présentant les plus grandes valeurs au sein de l'intervalle d'intensité considéré.

Dans cet exemple, si N est égal à 4, l'intensité moyenne I2 du deuxième sous-intervalle SI2 est égale à I1*p, l'intensité moyenne I3 du troisième sous-intervalle SI3 est égale à I1*p², et l'intensité moyenne I4 du quatrième sous-intervalle SI4 est égale à I1*p³.

Cet exemple permet de définir des paliers d'intensité qui sont avantageusement perçus comme sensiblement également espacés par l'œil humain (du fait de sa perception non linéaire), ce qui permet à la fois de respecter les bornes minimale et maximale des intervalles d'intensité associés aux différentes fonctions photométriques et définis par la réglementation relative aux blocs optiques adaptatifs et d'offrir un bloc optique dont l'adaptation de l'intensité lumineuse apparaît équilibrée dans différents scénarios d'utilisation et conditions de visibilité extérieure.

Selon l'invention, le valeur p est défini pour chaque intervalle considéré par l'équation p = 10^{[1/(N-1)]*log(IN/I1)}. Dans ce cas, si N est égal à 4 et que les bornes minimale et maximale de l'intervalle d'intensité associé à la fonction photométrique de feu de position sont respectivement égales à 4 cd et 42 cd, on obtient une valeur de p égale à environ 1,6355, une première intensité moyenne I1 égale à 8 cd, une deuxième intensité moyenne I2 égale à 13,1 cd, une troisième intensité moyenne I3 égale à 21,4 cd, et une quatrième intensité moyenne I4 égale à 35 cd. De même, si les bornes minimale et maximale de l'intervalle d'intensité associé à la fonction photométrique de feu de stop sont respectivement égales à 60 cd et 730 cd, on obtient une valeur de p égale à environ 1,8, une première intensité moyenne I1 égale à 60 cd, une deuxième intensité moyenne I2 égale à 108 cd, une troisième intensité moyenne I3 égale à 194,4 cd, et une quatrième intensité moyenne I4 égale à 350 cd. Egalement de même, si les bornes minimale et maximale de l'intervalle d'intensité associé à la fonction photométrique de feu de changement de direction sont respectivement égales à 50 cd et 1000 cd, on obtient une valeur de p égale à environ 1,8, une première intensité moyenne I1 égale à 60 cd, une deuxième intensité moyenne I2 égale à 108 cd, une troisième intensité moyenne I3 égale à 194,4 cd, et une quatrième intensité moyenne I4 égale à 350 cd.

On notera que d'autres valeurs de N peuvent être utilisées. Notamment, on peut, au sein d'un même véhicule, utiliser pour une même fonction photométrique des valeurs de N différentes et/ou des bornes de sous-intervalles différentes selon les scénarios d'utilisation et/ou les conditions de visibilité extérieure. A titre d'exemple, de jour s'il fait beau on peut utiliser des premières bornes maximales et une première valeur N, tandis que s'il pleut on peut utiliser des secondes bornes maximales et une seconde valeur N.

## Revendications

1. Dispositif de contrôle (DC) pour un bloc optique (BO) de véhicule adaptatif et comprenant au moins une source (SL) propre à délivrer un faisceau de lumière participant à une fonction de signalisation, ledit dispositif de contrôle (DC) comprenant des moyens de contrôle (MC) agencés pour contrôler l'intensité dudit faisceau de lumière délivré en fonction d'une fonction photométrique à laquelle participe ladite source (SL), lesdits moyens de contrôle (MC) étant en outre agencés pour contrôler ladite intensité du faisceau de lumière délivré afin qu'elle appartienne à un sous-intervalle d'intensité choisi en fonction d'une mesure d'intensité lumineuse à l'extérieur dudit véhicule parmi au moins deux sous-intervalles d'intensité appartenant à un intervalle d'intensité fonction de ladite fonction photométrique, **caractérisé en ce que** lesdits sous-intervalles d'intensité dudit intervalle d'intensité comprennent une valeur moyenne définie par la suite géométrique In = I1*pⁿ⁻¹, où n est un indice désignant lesdits sous-intervalles d'intensité de l'intervalle d'intensité considéré et compris entre 1 et N, N est le nombre total de sous-intervalles d'intensité de l'intervalle d'intensité considéré, I1 est l'intensité moyenne du sous-intervalle présentant les plus petites valeurs au sein de l'intervalle d'intensité considéré, et p est une valeur fonction de N, I1 et IN, IN étant l'intensité moyenne du sous-intervalle présentant les plus grandes valeurs au sein dudit intervalle d'intensité considéré. et **en ce que** p est défini pour chaque intervalle considéré par l'équation p = 10^{[1/(N-1)]*log(IN/I1)}.

2. Bloc optique (BO) adaptatif, propre à équiper un véhicule et comprenant au moins une source (SL) propre à délivrer un faisceau de lumière participant à une fonction de signalisation, **caractérisé en ce qu'**il comprend en outre au moins un dispositif de contrôle (DC) selon la revendication précédente.

3. Bloc optique selon la revendication 2, **caractérisé en ce que** chaque fonction photométrique à laquelle participe ladite source (SL) est choisie dans un groupe comprenant une fonction de feu de position, une fonction de feu de stop, une fonction de feu de changement de direction, une fonction de feu antibrouillard et une fonction de feu de jour.

4. Véhicule, **caractérisé en ce qu'**il comprend au moins un bloc optique (BO) selon l'une des revendications 2 et 3.

5. Véhicule selon la revendication 4, **caractérisé en ce qu'**il est de type automobile.

## Patentansprüche

1. Steuervorrichtung (DC) für eine adaptive optische Einheit (BO) eines Fahrzeugs, die mindestens eine Quelle (SL) umfasst, die in der Lage ist, einen Lichtstrahl zu liefern, der an einer Signalfunktion teilnimmt, wobei die Steuervorrichtung (DC) Steuermittel (MC) umfasst, die so beschaffen sind, dass sie die Intensität des gelieferten Lichtstrahls in Abhängigkeit von einer photometrischen Funktion steuern, an der die Quelle (SL) teilnimmt, wobei das Steuermittel (MC) ferner so eingerichtet ist, dass es die Intensität des abgegebenen Lichtstrahls so steuert, dass sie zu einem Intensitätsunterbereich gehört, der in Abhängigkeit von einer Messung der Lichtintensität außerhalb des Fahrzeugs aus mindestens zwei Intensitätsunterbereichen ausgewählt wird, die zu einem Intensitätsbereich gehören, der von der photometrischen Funktion abhängt
- **dadurch gekennzeichnet, daß** die Intensitätsunterintervalle des Intensitätsintervalls einen Mittelwert aufweisen, der durch die geometrische Folge In = I1*pn-1 definiert ist, wobei n ein Index ist, der die Intensitätsunterintervalle des betrachteten Intensitätsintervalls bezeichnet und zwischen 1 und N liegt, N die Gesamtzahl der Intensitätsunterintervalle des betrachteten Intensitätsintervalls ist, I1 ist die durchschnittliche Intensität des Teilintervalls mit den kleinsten Werten innerhalb des betrachteten Intensitätsintervalls, und p ist eine Funktion von N, I1 und IN, wobei IN die durchschnittliche Intensität des Teilintervalls mit den größten Werten innerhalb des betrachteten Intensitätsintervalls ist.
und dass p für jedes betrachtete Intervall durch die Gleichung p = 10[1/(N-1)]*log(IN/I1) definiert ist.

2. Adaptive optische Einheit (BO), die zur Ausrüstung eines Fahrzeugs geeignet ist und mindestens eine Quelle (SL) umfasst, die geeignet ist, ein Lichtbündel zu liefern, das an einer Signalfunktion teilnimmt, **dadurch gekennzeichnet, dass** sie außerdem mindestens eine Steuervorrichtung (DC) nach dem vorhergehenden Anspruch umfasst.

3. Optische Einheit nach Anspruch 2, **dadurch gekennzeichnet, dass** jede photometrische Funktion, an der die Quelle (SL) teilnimmt, aus einer Gruppe ausgewählt ist, die eine Positionslichtfunktion, eine Bremslichtfunktion, eine Richtungsänderungslichtfunktion, eine Nebellichtfunktion und eine Tagfahrlichtfunktion umfasst.

4. Fahrzeug, **dadurch gekennzeichnet, dass** es mindestens eine optische Einheit (BO) nach einem der Ansprüche 2 und 3 umfasst.

5. Fahrzeug nach Anspruch 4, **dadurch gekennzeichnet, dass** es von der Art eines Automobils ist.

## Claims

1. Control device (DC) for an adaptive vehicle optical unit (BO) and comprising at least one source (SL) capable of delivering a light beam participating in a signalling function, said control device (DC) comprising control means (MC) arranged to control the intensity of said delivered light beam as a function of a photometric function in which said source (SL) participates said control means (MC) being further arranged to control said intensity of the delivered light beam so that it belongs to an intensity sub-interval selected as a function of a measurement of light intensity outside said vehicle among at least two intensity sub-intervals belonging to an intensity interval depending on said photometric function
- **characterized in that** said intensity subintervals of said intensity interval comprise an average value defined by the geometric sequence In = I1*pn-1, where n is an index designating said intensity subintervals of the considered intensity interval and comprised between 1 and N, N is the total number of intensity subintervals of the considered intensity interval, I1 is the average intensity of the subinterval with the smallest values within the considered intensity interval, and p is a function of N, I1 and IN, IN being the average intensity of the subinterval with the largest values within said considered intensity interval.
and **in that** p is defined for each considered interval by the equation p = 10[1/(N-1)]*log(IN/I1).

2. Adaptive optical unit (BO), suitable for equipping a vehicle and comprising at least one source (SL) suitable for delivering a beam of light participating in a signalling function, **characterized in that** it also comprises at least one control device (DC) according to the preceding claim.

3. An optical unit according to claim 2, **characterized in that** each photometric function in which said source (SL) participates is selected from a group comprising a position light function, a stop light function, a direction change light function, a fog light function and a daytime running light function.

4. Vehicle, **characterized in that** it comprises at least one optical unit (BO) according to one of claims 2 and 3.

5. Vehicle according to claim 4, **characterized in that** it is of the automobile type.
